# EUROPEAN PATENT APPLICATION

(11) **EP 4 390 318 A1**
(43) Date of publication of application: **26.06.2024**
(21) Application number: 22215523.6
(22) Date of filing: 21.12.2022
(51) Int. Cl.: G01C 21/30, G01S 15/89

(54) **METHOD AND SYSTEM FOR DETERMINING A PRECISE POSITION OF A VEHICLE BASED ON SENSOR DATA**

(71) Applicant: VOLKSWAGEN AG, 38440 Wolfsburg (DE)
(72) Inventor: Prohm, Christopher, 80809 München (DE); Niestroj, Richard, 80802 München (DE)

(57) **Abstract**

Method for determining a precise position of a vehicle with at least one ultrasonic sensor device based on sensor data generated by the at least one ultrasonic sensor device of the vehicle, including:
- receiving one-dimensional sensor data generated by the at least one ultrasonic sensor device while the vehicle at least temporarily is moving through an environment, wherein the sensor data is characteristic for a distance between the vehicle and at least an object in the environment of the vehicle;
- receiving odometrical sensor data generated by at least one odometrical sensor device of the vehicle;
- generating a local depth map based on the received sensor data and the received odometrical data;
determining a precise position of the vehicle by comparing the local depth map with a reference depth map, in particular by evaluation of a correlation function between the generated local depth map and a reference depth map.

## Description

The present invention relates to a method for determining a precise position of a vehicle based on sensor data generated by at least one ultrasonic sensor device of the vehicle.

It is commonly known that the determination of an exact position of a vehicle by conventional methods mainly based on GPS e.g. for navigation systems can be somehow problematic in urban environments due to the GPS signal loosing precision due to obstructions by buildings and the like.

From the prior art there are other methods known for an improved determination of a position of the vehicle, e.g. LIDAR based localization or SLAM (simultaneous localization and mapping), the latter being known typically from robotic techniques. However, these methods are very complex and the required technical components are quite expensive.

From US 2021/0325207 A1 a map updating method, system and a readable storage medium for autonomous driving is known. The method may include: a vehicle sends a local map request to a server, the local map request includes current location data of the vehicle, the vehicle includes an autonomous driving vehicle; the vehicle receives a first local map of the current location from the server, the first local map covers a first distance on the route of the vehicle; a sensor mounted on the vehicle collects first surrounding environment data of the vehicle during travelling along the first distance; and based on the first local map and the first surrounding environment data, the vehicle generates map update data and sends the data to the server.

It is therefore the objective of the invention to provide a solution for determining a precise position of vehicle using sensor devices already installed in the vehicle in a more easily and more cost effective fashion.

The afore-mentioned problems are eliminated by the subject-matter according to the independent claims. Advantageous embodiments and further developments form the subject matter of the sub-claims.

A method for determining a, in particular precise, position of a vehicle with at least one ultrasonic sensor device based on sensor data generated by at least one ultrasonic sensor device of a (the) vehicle includes the following (in particular computer-implemented) steps. In one step (ultrasonic) sensor data, which are generated by the at least one ultrasonic sensor device while the vehicle is at least temporarily (preferably essentially all the time) moving through/in an environment, are received. The (ultrasonic) sensor data are characteristic for a distance between the vehicle and at least an object in the environment of the vehicle, and preferably for a plurality of objects in the environment of the vehicle. Preferably, the (ultrasonic) sensor data are transmitted and/or received while the vehicle is moving in the environment.

Preferably, the objects are located on the roadside and/or the side of the moving trajectory of the vehicle. Preferably, the at least one ultrasonic sensor used for generating the (ultrasonic) sensor data is arranged on a side surface of the vehicle, in particular preferably on the right side surface of the vehicle for vehicles moving in right-hand traffic and on the left side of the vehicle for vehicles moving in left-hand traffic.

In another step odometrical sensor data are received generated by at least one odometrical sensor device of the vehicle (preferably, in a computer-implemented step, in particular by a processor-based evaluation device). The odometrical sensor data may be, for instance transferred from the odometrical sensor device to a/the processor-based evaluation device and thus are received by the processor-based evaluation device).

In another step a local depth map is generated based on the received sensor data and the received odometrical sensor data (in particular in a computer-implemented step, in particular by a processor-based evaluation device).

Preferably, in another step, a precise position of the vehicle is determined by comparing the generated local depth map and a reference depth map, preferably by evaluation of a correlation function between the generated local depth map and a reference depth map (in particular in a computer-implemented step, in particular by the processor-based evaluation device). Alternatively or additionally, the local depth map generated by the vehicle may also be used for generating a global depth map which in turn is used for a (precise) position determination of (at least one) another vehicle with a ultrasonic sensor device (based on (ultrasonic) sensor data generated by the ultrasonic sensor device of the another vehicle).

In a preferred embodiment, the only sensor data characteristic of the environment of the vehicle, used for generating the local depth map are sensor data generated by the at least one ultrasonic sensor device. In other words, no other sensor data representing information about the environment than (one-dimensional) sensor data generated by the at least one ultrasonic sensor device are used. For example, no data generated by a sensor device for detecting the environment, like a camera or the like, other than ultrasonic sensor data generated by the at least one ultrasonic sensor device are generated and/or used for determining the (precise) position of the vehicle. In particular the ultrasonic sensor device is only suitable and intended for acquiring one-dimensional sensor data. This offers the advantage of a very cost-sensitive solution for determining the precise position.

In a preferred embodiment of the present invention the at least one ultrasonic sensor device is also used for other functions, such as a parking assistant, while preferably the same applies also for the at least one odometrical sensor device. This offers the advantage that no additional sensor devices are required and only already installed components can be used for the method according to the present invention.

In a preferred embodiment at least one ultrasonic sensor device, preferably at least two sensor devices and particularly preferred at least three ultrasonic sensor devices and particularly preferred a plurality of sensor devices are used for the generation of sensor data. This offers the advantage of a more precise determination of the local depth map.

In a preferred embodiment of the present invention the ultrasonic sensor devices are arranged at different height positions of the vehicle. Preferably at least two ultrasonic sensor devices are located at different height positions of the vehicle related to each other. It is also thinkable to use a plurality of ultrasonic sensors which are located on different height positions of the vehicle and are arranged groupwise. For example a first group of ultrasonic sensor devices is located in a region near to a rear wheel and a second group is located in a region near to a front wheel. Hereby it is possible that individual ultrasonic sensors of these groups are arranged in pairs or in groups at the same height in relation to the vehicle.

In a preferred method the sensor data is characteristic for a distance between the vehicle and an object in the environment of the vehicle and in particular between the respective ultrasonic sensor device and an object in the environment of the vehicle. An object in the environment of the vehicle might be a building, a part of infrastructure such as an tunnel, bridge, parking vehicles and the like.

In a preferred embodiment of the present invention objects in the environment of the vehicle within a distance less than 10m, preferably less than 5m and particularly preferably less than 3m can be detected. In another preferred embodiment of the present invention objects in the environment of the vehicle within a distance less than 2m, preferably less than 1m and particularly preferably less than 0.5m can be detected.

In a preferred method the at least one ultrasonic sensor and preferably the plurality of ultrasonic sensor devices are read out continuously. In another preferred method it is possible that the at least one ultrasonic sensor and preferably the plurality of ultrasonic sensor devices are read out in intervals, preferably twice per second, preferably once per second and particularly preferred once per two seconds. In a preferred embodiment it is possible that a frequency how often a certain ultrasonic sensor device is read out is fixed or variable. In a preferred method this frequency is dependent on the speed of the vehicle, e.g. the higher the speed of the vehicle the more often the ultrasonic sensor devices are read out.

In a preferred embodiment if more than one ultrasonic sensor device is used for conducting a method according to the present invention all ultrasonic sensor devices are synchronized with each other and all ultrasonic sensor devices are read out simultaneously.

The sensor data received from the at least one ultrasonic sensor device and preferably from the plurality of ultrasonic sensor devices correspond to a "free space" in the environment of the vehicle, e.g. if an ultrasonic sensor device is used which is located above a rear wheel of the vehicle, the received sensor data correspond to the free space related to the rear wheel. Preferably the received sensor data is characteristic for a distance between the respective ultrasonic sensor device and the object in the environment of the vehicle. Depending on the number of used ultrasonic sensor devices this can be a single measurement e.g. how much space is available perpendicular to the vehicle near to the rear wheel or multiple measurements deliver how much space is available all around the vehicle or on one side of the vehicle instead.

In another step of a preferred method the received sensor data can be put in a common spatial context if the motion of the vehicle is known. In a preferred embodiment the motion of the vehicle is estimated by the odometry of the vehicle. In one step of a preferred method odometrical data are received generated by at least one odometrical sensor device of the vehicle.

In a preferred embodiment the odometrical sensor device is selected from a group of odometrical sensor devices, which include a sensor for measuring a steering wheel angle, a sensor for measuring an acceleration of the vehicle, an inertial measurement unit, an odometer for measuring the wheel revolutions of the vehicle and the like.

In a preferred embodiment of the present invention the odometrical sensor data are characteristic for a speed of the vehicle and/or a wheel revolution and/or for an acceleration of the vehicle and/or for a deceleration of the vehicle and/or for a steering wheel angle of the vehicle and/or a position of the vehicle related to a slope of the street.

In a preferred embodiment of the present invention it is assumed that the motion of the vehicle proceeds in a linear fashion. In this case all wheels travel the same distance which corresponds directly to the traveled distance of the vehicle. With other words the odometrical data e.g. speed of the vehicle or the number of wheel revolutions is characteristic for the motion of the vehicle and can be put into an simple relation to the sensor data generated by the at least one ultrasonic sensor device.

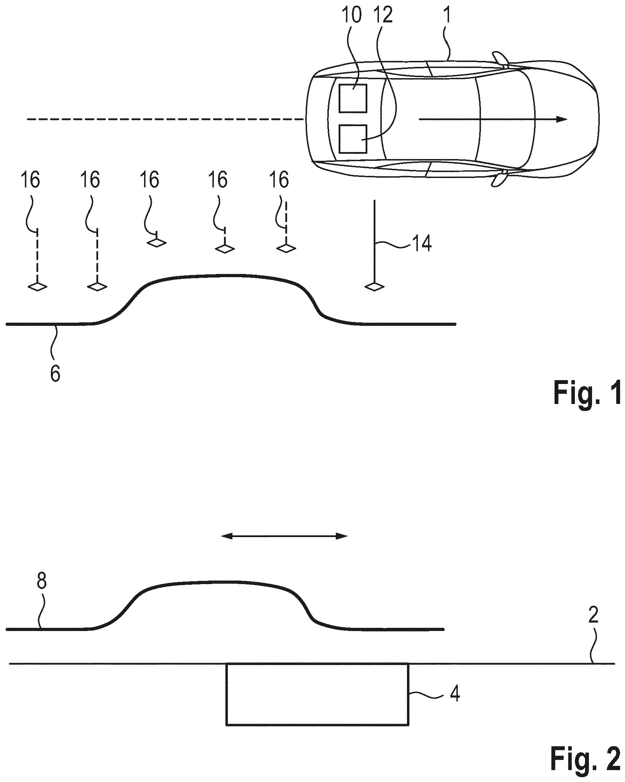

In another step of a preferred method a local depth map is generated based on the received sensor data and the received odometrical sensor data. In the context of the present invention a local depth map in particular describes a one-dimensional depth map in lateral direction. With other words the local depth map complies to a graph where the distance between the vehicle and an object in lateral direction related to the vehicle can be plotted on the y axis while on the x axis the time or alternatively the traveled distance of the vehicle is plotted. An exemplary graph is depicted in figure 1 of the present invention. The shown graph is normalized to traveled distance, whereby no x axis is required anymore.

In a further advantageous embodiment additional odometrical data is received from another odometrical sensor device and used for the generation of the local depth map. In a preferred embodiment odometrical data related to a steering wheel angle and/or odometrical data related to an acceleration of the vehicle and/or odometrical data related to a deceleration of the vehicle and/or odometrical data related to a position of the vehicle (related to a slope of the street) are used for the generation of the local depth map. This offers the advantage that the generation of the local depth map can be performed more accurate while a real trajectory of the vehicle is considered and not only a linear motion.

As mentioned above the reading out of the at least one ultrasonic sensor device and/or the at least one odometrical sensor device can be performed continuously or from time to time. When the readout is performed from time to time e.g. once per second it is possible in a preferred method to interpolate between single data points, preferably whereby additional odometrical sensor data are used to improve the accuracy of the local depth map.

In a further step of a preferred method a precise position of the vehicle is determined by comparison of the local depth map with a (the) reference depth map, preferably by evaluation of a correlation function between the generated local depth map and a reference depth map (preferably by the processor based evaluation device). With other words, the measured local depth map, which in particular represents only a small part of a map is correlated with a global depth map and/or a reference depth map and a maximum value of this correlation function is determined to derive an exact (and/or the precise) position of the vehicle. In order to conduct such a correlation it is necessary to get a reference depth map. Such a reference depth map can for example be derived from depth maps previously collected (and/or from downloading and/or requesting the reference map from a external storage device) and/or from a three dimensional map and in particular from a highly resolved three dimensional map. In a preferred embodiment the reference depth map is derived from a three dimensional map, which is stored in a memory device of the vehicle or on an external memory device such as an external server. It is also conceivable, that the reference height map is or is derived from a two-dimensional labelled map. Preferably, the method includes requesting and/or downloading at least a section of a (in particular three dimensional and/or two dimensional) map.

In a preferred embodiment a reference map and/or a reference depth map is stored on a memory device of the vehicle and in particular stored on an external memory device such as a remote server. The latter offers the advantage that actual data can be used to improve the accuracy of the method according to the present invention. In a preferred embodiment a reference depth map is generated from a two dimensional map such as it is used for navigation systems, while additional data for the third dimension could be derived from other sources such as google street view, surveilling systems, other vehicles e.g. transmitted by car to car communication methods and on the like.

The local depth map generated from the sensor data of the at least one ultrasonic sensor device can be considered as a one dimensional curve which is normalized by the traveled distance of the vehicle. The reference depth map can be considered as a two dimensional assemble of a plurality of such curves and therefore the target of the evaluation of the correlation function between the local depth map and the reference depth map is to find a position where the overlap between both has a maximal value, what complies to the exact position of the vehicle. Spoken in very simplified terms the local depth map and a desired part of the reference depth map can be considered as key and lock and the target is to find the best fitting position.

In a preferred embodiment the comparison of the local depth map with the reference depth map and/or the global depth map and/or a request for receiving the reference depth map includes the determination of approximate position of the vehicle, wherein the approximate position of the vehicle is derived from GPS data related to a position of the vehicle. This offers the advantage that the starting point of the evaluation process of the correlation function is already quite close to the desired result and therefore results in a reduction of false locations saving time and computer resources.

In a preferred embodiment the evaluation of the correlation function includes the use of at least two parameters, wherein in particular a first parameter corresponds to a position of the vehicle related to a street direction and preferably a second parameter corresponds to a position of the vehicle perpendicular to the street direction. Since the largest variations of the depth values are expected along the street direction it is sufficient in a first place to use only the first parameter (street direction) for the evaluation of the correlation function. It is thinkable to use simple iteration methods to determine step by step the exact position of the vehicle, e.g. by trying various positions in equidistant steps. Such a simple procedure is still quite efficient due to the asymmetric nature of the problem. With other words it only requires a one-dimensional search as it is depicted exemplarily in figure 2.

Additionally or alternatively the evaluation of the correlation function can be optimized by using a sampling procedure to randomly generate potential correlation parameters or by using Bayesian approaches, as for example the Extend Kalman Filter (abbreviation EKF). As a sampling method, for instance, a particle filter (preferably based on an Bayesian approach) can be used.

Applying the method according to the invention delivers highly resolved mapping data with respect to the environment of the vehicle. In a further preferred step the hereby obtained highly resolved mapping data are used to update existing maps such as a global (depth) map and/or a reference (depth) map.

As the data obtained from a single vehicle does not contain any information as to whether the detected object complies to permanent objects such as buildings, bridges, tunnels and the like or to temporary objects such as parking vehicles it is suggested to use a plurality of datasets. It would be thinkable to use a plurality of datasets of a single vehicle which passes to the same region of interest multiple times or to use datasets from different vehicles. By comparison of different data sets and the formation of averaged mapping data it can be easily determined, whether a registered object is a permanent one or not. For example when an object is present in every dataset it is clearly a permanent object of the environment of the street such as a building and if the object is only present in a partial amount of the data sets this is only a temporary object such as a parking vehicle.

The same situation applies for moving objects such as other traffic participants. For example when another vehicle is driving next the vehicle conducting the method of the present invention for a certain time the obtained local depth map shows an similar or identical pattern and therefore would suggest the presence of a object. In this case by comparison with other datasets the presence of a temporary object can be confirmed.

For this situation it would be also conceivable to use data from a navigation system which include information about the number of lanes of a street. By this way a further plausibility test could be performed, whether the presence of a temporary object such as another driving vehicle makes sense e.g. when the ego vehicle is driving on a single lane or a multi lane street.

Preferably, a (detected) object is investigated with respect to the question whether it is a temporary object and/or a static object. Preferably, this is done by using a plurality of local depth maps (generated by using one vehicle and particularly by using a plurality of vehicles). Preferably, an (detected) object and in particular every (detected) object is classified in one of the two classes, wherein one class comprises (only) static objects (as houses and the like) and the other class comprises (only) temporary objects.

As mentioned above it is possible to use more than one ultrasonic sensor device which might be arranged at different heights related to the vehicle. In a preferred embodiment sensor data generated by at least two ultrasonic sensor device which are arranged at different height positions of the vehicle are used for the generation of the local depth maps. Preferably two local depth maps are generated by this ways. Both local depth maps generated this way are independent from each other and comply each to a one-dimensional depth map in lateral direction of the vehicle. The use of two maps for the determination of the precise position of the vehicle and especially for a subsequent update of a global map or a reference map delivers information in two different height positions. For example this offers the possibility to determine the height of small object. For example it is possible to detect a curbstone or a garbage can.

Preferably, the method for determining a precise position and/or the determination of the precise position and/or generating a local depth map is carried out during the entire duration of the movement of the vehicle. Preferably, the precise position of the vehicle and/or the local depth map is determined and/or generated repeatedly, preferably at, in particular pre-set and/or adjustable, fixed (time) intervals.

Preferably, the frequency of determination of the precise position of the vehicle and/or the generation of the local depth map is in a range between 1/20 s and 1 s, preferably in a range between 1/10 s and 0,5 s, and in particular preferably in a range between 1/3 s and 0,5 s.

In a preferred method, the method for determining a precise position and/or the determination of the precise position and/or generating a local depth map is activated in the vehicle in particular in moving and/or driving situations in which the vehicle only detects weak GPS signal reception. Preferably, a threshold value is set and/or stored (in a local storage device of the vehicle) for the strength of the GPS signal. Preferably, the activation of the determination of the precise position and/or generating a local depth map is based on a comparison of a GPS signal strength determined by the car and the threshold value. This offers the advantage, that not only in urban and/or built-up environments but also in other environments with weak GPS signal reception (as tunnels, canyons and the like) a local depth map may be generated in order to precisely localize the vehicle.

Preferably, the frequency of determination of the precise position of the vehicle and/or the generation of the local depth map is controlled by a user of the vehicle and/or adapted in dependence of an uncertainty parameter of the current position determination of the vehicle, and/or the strength of the GPS signal detected by the vehicle.

Preferably, a collection of local depth maps and/or a plurality of local depth maps and/or a generation of a global depth map is (essentially or predominantly) limited to (or limited in focus to) places and/or regions in which a GPS localization is (at least temporarily) difficult and/or in which the GPS signal strength is below a (preset) threshold value.

It is also conceivable, that the global depth map is only (or essentially or predominantly) limited to places and/or regions in which a GPS localization is (at least temporarily) difficult and/or in which the GPS signal strength is below a (preset) threshold value.

Preferably, the described method for determining a precise position of a vehicle with at least one ultrasonic sensor device based on sensor data generated by the at least one ultrasonic sensor device of a vehicle is used to generate a global reference depth map.

The present invention is further directed to a method generating a global reference depth map (in particular by a processor-based global depth map generation device), in particular based on the sensor data generated by the sensor devices for detecting an environment of a vehicle swarm (a plurality of vehicles) including the steps of:
For each vehicle of the vehicle swarm, one-dimensional sensor data generated by the at least one ultrasonic sensor device while the vehicle at least temporarily is moving through an environment are determined and/or received (by the global depth map generation device), wherein the sensor data is characteristic for a distance between the vehicle and at least an object in the environment of the vehicle.

For each vehicle of the vehicle swarm, position data determined by the vehicle and/or odometrical sensor data generated by at least one odometrical sensor device of the vehicle are received and/or determined (by the global depth map generation device).

For each vehicle of the vehicle swarm, a local depth map based on the received sensor data and the received odometrical data and/or the position data is generated.

In particular, thus a plurality of local depth maps is generated. Preferably, the plurality of local depth maps are compared to each other. Preferably, at least one section of the plurality of local depth maps (the so called coinciding section) is determined for each of the plurality of local depths maps, which refer to the same area of the environment. This may be done via determining a correlation between the local depths maps.

Preferably, the respective coinciding sections of the plurality of local depth maps are used to determine one resulting local depth map. For instance the resulting local depth map may be determined by averaging the coinciding sections of the plurality of local depth maps. For that, preferably, a statistical method is used which, preferably, takes into account, for instance, the probability of temporary objects.

For determining the (in particular one) resulting local depth map, it may be determined for at least one object of the environment, whether the object is a dynamic object (as a parking vehicle) and/or whether it is a static object (as a building).

Preferably, the resulting local depth map may is merged with another local depth map (determined via the same procedure) and/or used to update a pre-existing global depth map.

In particular, by means of this, a global depth map may be generated. In particular the global depth map may be uploaded and/or stored on a cloud-based storage device (in particular server) and/or a cloud-based server. Preferably, the storage device is configured that upon request at least parts of the global depth map may be downloaded by a requesting vehicle and/or device.

Additionally or alternatively, the global depth map and/or the reference depth map and/or the (other) local depth maps are provided and/or transmitted and/or exchanged and/or merged via Vechicle-to-Vehicle-communication and/or Mesh networks. This offers the advantage that areas with limited or disturbed network connections (for instance crisis areas) can be supported.

Here, the position at which the exchange and/or the transmission takes place could be used to provide the start position instead of a GPS signal.

Preferably, in that case, each vehicle would generate and/or update and/or expand its own reference depth map and/or global depth map, and extend and/or compare it with the reference depth map and/or the global depth map of other vehicles.

Additionally or alternatively, the global depth map may be uploaded and/or stored on a local storage device, as the storage device of a vehicle.

Preferably, for each vehicle, a precise position of the vehicle by comparing the local depth map with a reference depth map, in particular by evaluation of a correlation function between the generated local depth map and a reference depth map is determined.

The present invention is further directed to a system for determining a (precise) position of a vehicle with at least one ultrasonic sensor device (in particular during a movement of the vehicle in an environment), based on, in particular one-dimensional, (ultrasonic) sensor data generated by the at least one ultrasonic sensor device. Preferably, the at least one ultrasonic sensor device is only suitable to generate one-dimensional (ultrasonic) sensor data. Preferably, the at least one ultrasonic sensor device is part of the vehicle.

Furthermore, the system comprises at least one odometrical sensor device (which preferably is part of the vehicle) for the generation of odometrical data.

Furthermore, the system comprises an (in particular processor-based) evaluation device, which is suitable and intended to receive the (ultrasonic) sensor data generated by the at least one ultrasonic sensor device while the vehicle - at least temporarily - is moving through an environment, and/or data derived from the (ultrasonic) sensor data. Preferably, the (ultrasonic) sensor data is characteristic for a distance between the vehicle and at least an object in the environment. Preferably, the evaluation device is suitable and intended to receive the (ultrasonic) sensor data from the at least one ultrasonic sensor device while the vehicle - at least temporarily - is moving through the environment.

Furthermore, the evaluation device is suitable and intended to receive the odometrical data of the at least one odometrical sensor device (of the vehicle) and/or generated by the at least one odometrical sensor device (of the vehicle), preferably while the vehicle is moving.

Furthermore, the (processor-based) evaluation device is suitable and intended to generate a local depth map based on the received (ultrasonic) sensor data and the received odometrical data, wherein the evaluation device is suitable and intended to determine a (precise) position of the vehicle by comparing the (generated) local depth map with a reference depth map, in particular by evaluation of a correlation function between the generated local depth map and a/the reference depth map.

In a preferred embodiment of the present invention the system comprises a memory device on which a reference depth map and/or a global reference map is stored. In another preferred embodiment the system comprises a communication unit, which is suitable and intended for receiving and transmitting data with respect to the reference depth map and/or the global reference map.

Preferably, the system is suitable and/or configured to carry out each of the method steps described in the context of the method in the section above and preferably, the above-described method may use any of the features of the system.

The present invention is further directed to a vehicle, in particular motor vehicle and/or designed for autonomous or partially autonomous controlled driving, comprising an system for a vehicle according an embodiment described above.

The vehicle may in particular be a (motorized) road vehicle, in particular a car, a motorbike, or a truck. The vehicle may be a snow plow. The vehicle may be a motor vehicle, which is in particular a motor vehicle controlled by the driver himself ("driver only"), a semi-autonomous, autonomous (for example, autonomy level 3 or 4 or 5 (of the SAE J3016 standard)) or selfdriving motor vehicle. In this context, autonomy level 5 refers to fully automatic driving vehicles. Likewise, the vehicle may be a driverless transport system. The vehicle can be controlled by a driver or drive autonomously. Furthermore, in addition to a road vehicle, the vehicle may also be an air cab, an aircraft, and other means of transportation or another type of vehicle, such as an air, water, or rail vehicle (e.g. a train).

The present invention is further directed to an (in particular processor-based) evaluation device for determining a (precise) position of a vehicle with at least one ultrasonic sensor device, based on sensor data generated by the at least one ultrasonic sensor device. Furthermore, the evaluation device, is suitable and intended to receive the (ultrasonic) sensor data from the at least one ultrasonic sensor device, wherein the (ultrasonic) sensor data are generated while the vehicle is moving at least temporarily through an environment, wherein the sensor data is characteristic for a distance between the vehicle and at least an object in the environment. Furthermore, the evaluation device is suitable and intended and to the receive odometrical data generated by at least one odometrical sensor device of the vehicle.

The present invention is further directed to a computer program or computer program product comprising program means, in particular a program code, which represents or codes at least the method according to the invention and preferably one of the described preferred embodiments and is designed for execution by a processor device. Furthermore, the (processor-based) evaluation device is suitable and intended to generate a local depth map based on the received sensor data and the received odometrical data. Furthermore, the evaluation device is suitable and intended to determine a (precise) position of the vehicle by comparing the local depth map with a reference depth map, in particular by evaluation of a correlation function between the generated local depth map and a reference depth map.

Preferably, the evaluation device is suitable and/or configured to carry out single method steps and preferably each of the method steps described in the context of the method in the section above and preferably, the above-described method may use any of the features of the evaluation device.

The present invention is further directed to a data memory on which at least one embodiment of the computer program according to the invention or of a preferred embodiment of the computer program is stored.

Further advantages, objectives and features of the present invention will be described, by way of example only, in the following description with reference to the appended figures. In the figures, like components in different embodiments can exhibit the same reference symbols.

The figures show:
- Fig. 1: a schematic view of a vehicle comprising a system according to an embodiment of the invention; and
- Fig. 2: a step of a method according to a preferred embodiment of the present invention.

Fig. 1 shows a schematic vehicle 1 with an system 10 according to a embodiment of the present invention. The vehicle 1 is driving along the street, while an ultrasonic sensor device 12 acquires sensor data. The reference sign 16 corresponds to sensor data acquired in the past, while the reference sign 14 is assigned to current sensor data. The system 10 and more precisely the evaluation device (not depicted) receives the sensor data 14 and 16 and odometrical sensor data from related odometrical sensor devices (not depicted).

The system 10 and the evaluation device, respectively uses the acquired sensor data 14 and 16 in combination with the odometrical sensor data, which correspond to a motion of the vehicle to generate a local depth map, which is depicted as a estimated depth map 6 in figure 1. As it can be seen in figure 1 the sensor data 14 and 16 display data points which are processed by the evaluation device, which interpolates between these data points to generate the estimated depth map 6, which is normalized the driven distance.

Figure 2 shows a step of the method according to one embodiment of the present invention. The evaluation device (not depicted) evaluates the correlation function between the estimated depth map 8 and a reference map, which is represented by the street border 2 and the street furniture 4 what is a building for example. It has to be noted that the street border 2 is located below a height level of the ultrasonic sensor device 12 (not depicted). Therefore the related part of estimated depth map 8 is only a baseline. As indicated by the double sided arrow the evaluation device aligns the estimated depth map 8 to the reference map.

As a starting point for the evaluation for example a position of the vehicle determined by GPS is used. The estimated depth map 8 is shifted in a direction parallel to the street until the belly of the estimated depth map 8 overlaps with the position of the street furniture 4. At this point the value of the correlation function between the local depth map (estimated depth map 8) and the reference depth map (represented by the street border 2 and the street furniture 4) has an maximal value, which complies with the exact position of the vehicle 1.

The exact pattern of the estimated depth map 8 might be used to update the reference map or might be compared with data set derived from other vehicle conducting the same method (not depicted.

The applicant reserves his right to claim all features disclosed in the application document as being an essential feature of the invention, as long as they are new, individually or in combination, in view of the prior art. Furthermore, it is noted that in the figures features are described, which can be advantageous individually. Someone skilled in the art will directly recognize that a specific feature being disclosed in a figure can be advantageous also without the adoption of further features from this figure. Furthermore, someone skilled in the art will recognize that advantages can evolve from a combination of diverse features being disclosed in one or various figures.

### List of reference symbols

- 1: vehicle
- 2: street border
- 4: street furniture
- 6: estimated depth map
- 8: estimated depth map
- 10: system
- 12: ultrasonic Sensor
- 14: current ultrasonic reading
- 16: past ultrasonic readings

## Claims

1. Method for determining a precise position of a vehicle with at least one ultrasonic sensor device based on sensor data generated by the at least one ultrasonic sensor device of the vehicle, including:
- receiving one-dimensional sensor data generated by the at least one ultrasonic sensor device while the vehicle at least temporarily is moving through an environment, wherein the sensor data is characteristic for a distance between the vehicle and at least an object in the environment of the vehicle;
- receiving odometrical sensor data generated by at least one odometrical sensor device of the vehicle;
- generating a local depth map based on the received sensor data and the received odometrical data;
- determining a precise position of the vehicle by comparing the local depth map with a reference depth map, in particular by evaluation of a correlation function between the generated local depth map and a reference depth map.

2. Method according to claim 1, wherein
the only sensor data characteristic of the environment of the vehicle, used for generating the local depth map are sensor data generated by the at least one ultrasonic sensor device.

3. Method according to claim 1, wherein
at least two ultrasonic sensor devices, preferably at least three ultrasonic sensor devices and preferably a plurality of ultrasonic sensor devices are used for the generation of sensor data.

4. Method according to one of the preceding claims, wherein
at least two ultrasonic sensors are arranged on different height positions of the vehicle related to each other.

5. Method according to one of the preceding claims, wherein
the odometrical sensor device is selected from a group of odometrical sensor devices, which include a sensor for measuring a steering wheel angle, a sensor for measuring an acceleration of the vehicle, an inertial measurement unit and the like.

6. Method according to one of the preceding claims, wherein
the reference depth map is derived from a three dimensional map, which is stored in a memory device of the vehicle or on an external memory device.

7. Method according to one of the preceding claims, wherein
the evaluation of the correlation function includes the use of at least two parameters, wherein in particular a first parameter corresponds to a position of the vehicle related to a street direction and preferably a second parameter corresponds to a position of the vehicle perpendicular to the street direction.

8. Method according to one of the preceding claims, wherein
the comparison of the local depth map with the refer depth map and/or a request for receiving the reference depth map includes the determination of approximate position of the vehicle, wherein the approximate position of the vehicle is derived from GPS data related to a position of the vehicle.

9. System for determining a precise position of a vehicle with at least one ultrasonic sensor device based on sensor data generated by the at least one ultrasonic sensor device, wherein the system comprises at least one odometrical sensor device for the generation of odometrical data, wherein the system comprises an evaluation device, which is suitable and intended to receive one-dimensional sensor data generated by the at least one ultrasonic sensor device while the vehicle at least temporarily is moving through an environment, wherein the sensor data is characteristic for a distance between the vehicle and at least an object in the environment, wherein the evaluation device is suitable and intended to receive the odometrical data generated by the at least one odometrical sensor device of the vehicle, **characterized in that** the evaluation device is suitable and intended to generate a local depth map based on the received sensor data and the received odometrical data, wherein the evaluation device is suitable and intended to determine a precise position of the vehicle by comparing the local depth map with a reference depth map, in particular by evaluation of a correlation function between the generated local depth map and the reference depth map.

10. Vehicle (1), in particular motor vehicle, comprising a system according to the preceding claim.
